# NEW EUROPEAN PATENT SPECIFICATION

(11) **EP 2 908 615 B2**
(45) Date of publication and mention of the opposition decision: **29.04.2020**
(45) Mention of the grant of the patent: 21.12.2016
(21) Application number: 13771227.9
(22) Date of filing: 20.09.2013
(51) Int. Cl.: A01B 73/06, A01D 78/10

(54) **TEDDING MACHINE FOR PLANTS LYING ON THE GROUND**
ZETTER FÜR AUF DEM BODEN LIEGENDE PFLANZEN
FANEUSE POUR DES PLANTES SITUÉES SUR LE SOL

(30) Priority: 19.10.2012 NL 2009665
(43) Date of publication of application: 26.08.2015
(73) Proprietor: Forage Company B.V., 3147 PB Maassluis (NL)
(72) Inventor: VAN DEN ENGEL, Alfonsus Jacobus, NL-3147 PA Maassluis (NL)
(74) Representative: AGCO Intellectual Property Department
(86) International application number: PCT/NL2013/050674
(87) International publication number: WO 2014/062051

(56) References cited:
- EP-A1- 0 739 582
- EP-A1- 1 495 666
- EP-A1- 2 179 641
- WO-A1-99/12407
- WO-A2-2007/028926
- DE-A1-102007 026 186
- DE-A1-102011 014 419

## Description

The invention relates to a tedding machine for tedding plants lying on the ground, such as hay or grass, provided with a number of plant-processing members which, in their operating position, are rotatably driven by a motor about upward (rotation) shafts and have a number of tedding teeth, wherein the plant-processing members are arranged in two groups of in each case at least three plant-processing members in order to form, in a folded-out operating position of the tedding machine, at least a row of plant-processing members directed at right angles to the direction of travel and wherein each plant-processing member is preferably supported by a travelling wheel, wherein the plant-processing members are fitted to a common frame or drawbar which is coupleable to a tractor, and wherein the tedding machine can be brought from the operating position to a transport position, so that the width of the tedding machine in the folded-up transport position is smaller than in the operating position.

A tedding machine provided with three groups of plant-processing members is known from Dutch patent NL-1007596 C. The known machine is provided with three groups of plant-processing members which are attached to the same frame which can be pulled by a tractor. The groups are divided into a group situated in the middle, also referred to as the central group, which is attached at the rear of the frame and is situated in a line at right angles to the direction of movement, and two groups which treat strips of land on the outer side of the group situated in the middle. The plant-processing members of the three groups are arranged in such a way that, in operation, the plants on a continuous strip of land are treated. This means that, viewed in the direction of movement, the plant-processing member of an outer group of plant-processing members which is situated on the inner side overlaps the plant-processing members of the central group situated on the outer side. This overlap is usually greater than the overlap of the plant-processing members within an individual group. In order to bring the machine to a transport position, the outer plant-processing members are pivoted forward from the operating position to a folded-up position on a respective side of the frame, and for which members there are several ways of folding up in practice. The group situated in the middle remains at the rear of the frame and remains at right angles to the direction of movement, even in the transport position.

A tedding machine is also known from Dutch patent NL-1036115 C(EP 2 179 641 A1). This known tedding machine is also provided with three groups of plant-processing members which are attached to the same frame. In order to bring the tedding machine to a transport position, the outer plant-processing members are pivoted forwards, from the operating position to a folded-up position, on a respective side of the frame. The centre group also remains at the rear of the frame, even in the transport position, and the plant-processing members are pivoted upwards, but remain at right angles to the direction of movement, as is illustrated, for example, in Figure 2 of said patent.

The known tedding machines have the drawback that they are relatively wide in this transport position.

It is an object of the invention to provide a tedding machine in which the width of the tedding machine can be reduced further in the transport position thereof.

In order to fulfil this need, the present invention provides a tedding machine for tedding plants lying on the ground, comprising a common frame, and provided with a number of plant-processing members, wherein the plant-processing members are arranged in two groups of at least three substantially identical plant-processing members with tedding teeth which are attached to the common frame and, in an operating position, can be rotatably driven by a motor about upward rotation shafts, wherein the common frame is coupleable to a tractor vehicle via coupling means for advancing it in a direction of travel and driving the plant-processing members, and comprises a work frame and a carrying frame which is coupled to the work frame, wherein the work frame comprises a horizontal central frame beam, is tiltable and configured to move the plant-processing members from an operating position to a folded-up position, wherein the carrying frame comprises wheels or a wheel set for resting the carrying frame on the ground, wherein the tedding machine can be brought to a transport position wherein each group is mounted on a respective side of the common frame so as to be forwardly pivotable or rotatable from the operating position to the folded-up position, in such a manner that the width of the tedding machine in the transport position is smaller than in the operating position, wherein the plant-processing members in each group, in the operating position, are in a line at right angles to the direction of travel so that the tedding teeth of a plant-processing member describe a path and are arranged such that, in operation, the path of the tedding teeth of a directly adjacent plant-processing member is traversed, and wherein the work frame comprises a pivoting device which has, for at least one group, and preferably both groups, a respective pivot pin which is substantially vertical, at least in the transport position, in such a way that the at least one group, and preferably each group individually, can be brought from the folded-up position to the transport position by pivoting or rotating about the vertical pivot pin, and wherein the vertical pivot pin is connected to the horizontal central frame beam and is situated between the upwardly directed rotation shaft of the inner plant-processing member of the group or groups and the centre line of the common frame.

This construction inter alia has the advantage that no plant-processing members are situated at the rear of the frame in the transport position which remain at right angles to a direction of movement. In the transport position, all plant-processing members of a group are placed, viewed in the direction of movement, on a respective side of the common frame. This inter alia ensures that the tedding machine can be provided with wider plant-processing members, at least for those plant-processing members which, in the operating position, form the innermost of a group, without the width of the tedding machine increasing in the transport position thereof. Previously, fitting wider plant-processing members, i.e. where the plant-processing members have a larger diameter, represented a significant limitation because the projecting tedding teeth resulted in an undesired widening of the tedding machine in the transport position.

A further advantage is the fact that the width of the tedding machine in the transport position is no longer substantially determined by the width of a central group of two or more plant-processing members and this means that the construction of the tedding machine can be made less wide. Viewed from the centre line of the common frame, the hinge point of the inner plant-processing member of each group is placed further inward. Thus, both hinge points can be placed closer to the centre line and thus it is possible to achieve a significant width reduction of the tedding machine of 20 cm or more, for example of approximately 40 or 50 cm, in the transport position in a simple manner. Thus, a tedding machine is obtained which can be made more compact in the transport position.

In the operating position, the plant-processing members of each group are in a line at right angles to the direction of travel and process the plants lying on a continuous strip of land. In the operating position, the two groups of plant-processing members may be on two substantially parallel lines, and most preferably, all plant-processing members of both groups are in one line which is at right angles to a direction of travel. Furthermore, in the operating position, the plant-processing members are arranged in such a manner that they process an overlapping piece of land. This is understood to mean that, in operation, the tedding teeth of a plant-processing member describe a path and are arranged in such a manner that, in operation, the path of the tedding teeth of a directly adjacent plant-processing member is traversed.

According to the invention, all plant-processing members of a group coupled to a common frame beam are coupled to the work frame for moving a group from an operating position to a transport position via a folded-up position.

The tedding machine according to the invention has two groups, each comprising at least three plant-processing members. Each group may, for example, consist of three, four, five, or more plant-processing members with tedding teeth.

The plant-processing members may each have an operating width or diameter of 1.2 metres or more. In an embodiment of the invention, at least the plant-processing members which, viewed in the operating position and in the direction of movement, form the inner plant-processing member of a group have an operating width or diameter of at least 1.55 metres, preferably of at least 1.65 metres, and more preferably of at least 1.7 metres. Preferably, all plant-processing members of a group have the same operating width.

In the transport position, the plant-processing members are placed in such a manner that two separate rows of plant-processing members are formed in a direction of travel A parallel to the common frame. Viewed in the direction of movement, the rotation shafts of the plant-processing members of a group are preferably substantially parallel to each other, and they are substantially horizontal and at right angles to the direction of movement in the transport position. This inter alia ensures that the tedding machine is more stable during transport since more mass can be placed closer to the centre line of the tedding machine while the wheel base remains the same.

The invention will now be explained in more detail with reference to the attached figures, in which:
Figure 1 diagrammatically shows a top view of a tedding machine according to the prior art;
Figure 2 diagrammatically shows a top view of a tedding machine according to the invention;
Figure 3 diagrammatically shows a side view of a tedding machine according to the invention in a transport position; and
Figure 4 diagrammatically shows a top view of a tedding machine according to the invention in a transport position.

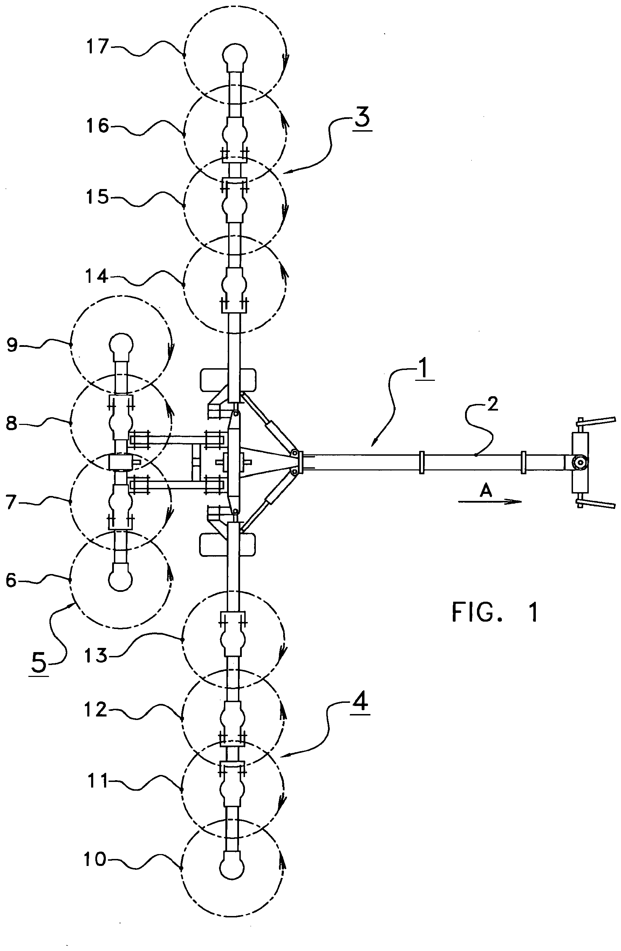

Fig. 1 shows a top view of a tedding machine in the operating position as is known from Dutch patent NL-1007596 C. The known machine (1) has three groups (3-5) of rotatable plant-processing members which are attached to a common frame (2). The groups are divided into a group (5) which is situated in the centre, in this example a group consisting of four plant-processing members (6-9), although in practice two plant-processing members are often used, which is coupled to the rear of the frame and wherein the plant-processing members are in a line at right angles to the direction of movement A, and two groups (3,4) which are situated on the outer sides of the group (5) situated in the centre. In this example, each of the two outer groups consists of four plant-processing members (10-13 and 14-17). In order to bring the machine into a transport position, the two outer groups are pivoted forward from the operating position to the folded-up position on one side of the frame. The group situated in the middle remains at the rear of the frame and also remains at right angles to the direction of movement during transport.

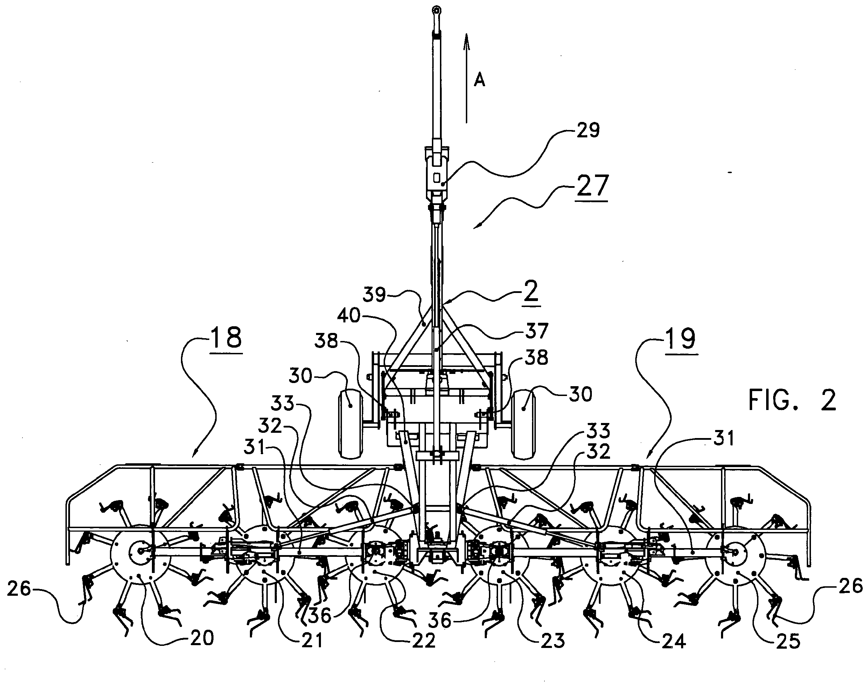

Fig. 2 shows a top view of a tedding machine (27) in the operating position according to a preferred embodiment of the invention. The tedding machine (27) consists of two groups of plant-processing members (18,19) which are substantially in one line at right angles to the direction of movement A and each group consists of three plant-processing members (20-22 and 23-25) which are coupled to the common frame (2). The plant-processing members (20-25) are provided with a plurality of tedding teeth (26). The common frame (2) is formed by a carrying frame (39) which rests on the ground by means of wheels (30) and by a tiltable work frame (40). The two groups of plant-processing members are coupled to the work frame (40). The plant-processing members of the two groups are arranged in such a way that, in the operating position, the plants situated on a continuous strip of land are processed. This means inter alia that the tedding teeth of the innermost plant-processing member (22) of the first group (18) describe a path which, in operation, traverses the path of the tedding teeth of the innermost plant-processing member (23) of the second group (19). It is immediately clear to those skilled in the art that a group could also comprise four or more plant-processing members.

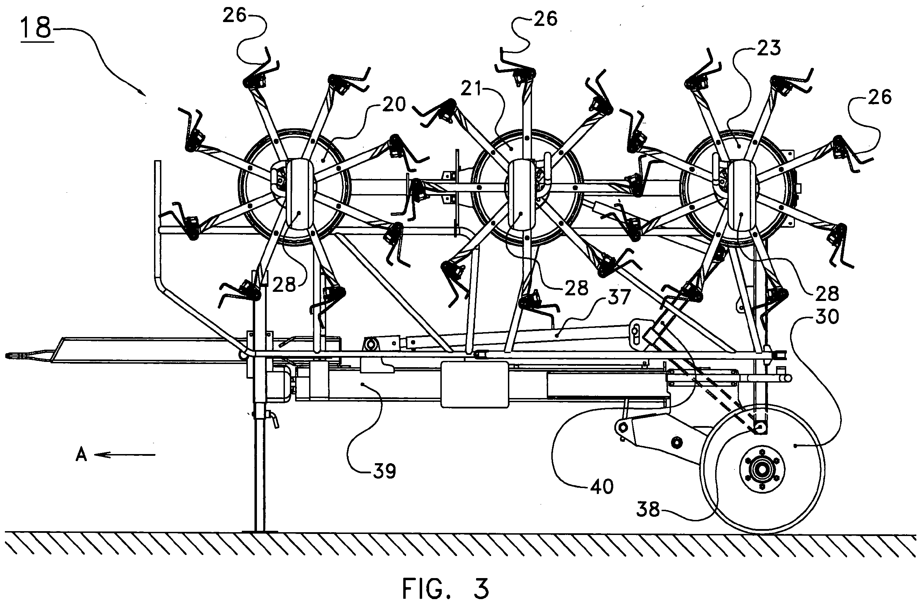

Fig. 3 diagrammatically shows a side view of the tedding machine (27) according to Fig. 2 in the transport position. In this embodiment, the three plant-processing members (20-22) of one group (18) are arranged in such a manner that they are parallel to each other in the direction of travel A. The plant-processing members are provided with a plurality of tedding teeth (26) and furthermore each comprise a supporting wheel (28). In this embodiment, it can clearly be seen that no plant-processing members are arranged at the rear of the frame which would remain at right angles to the direction of movement in the transport position and thus, as a result of the width of the plant-processing members, form a limiting factor for the transport width of the tedding machine. The work frame is arranged so as to be tiltable about a horizontal shaft or shafts (38), which is situated just behind the wheel (30) in Fig.3.

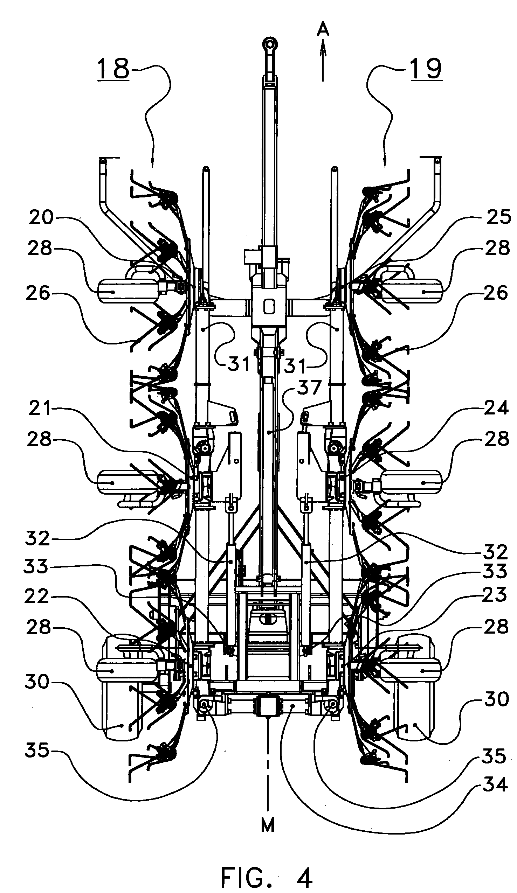

Fig.4 diagrammatically shows a top view of the tedding machine according to Fig.2 in the transport position. In this embodiment as well, the two groups (18, 19) are each provided with three plant-processing members (20-25) provided with a supporting wheel (28) and the plant-processing members are placed in such a manner that two respective rows of plant-processing members are formed in the direction of travel A parallel to the common frame (2). Viewed in the direction of movement, the upward rotation shafts (36) of the tedders of a group are preferably substantially parallel to each other, and more preferably also substantially at right angles to the direction of movement A. This inter alia ensures that the tedding machine becomes more stable during transport since more mass can be placed closer to the centre line of the tedding machine while the wheel base remains the same.

The common frame (2) is formed by a central frame beam (29) which is coupled to the carrying frame (39). Travelling wheels (30) are coupled to the carrying frame (39), for example via an extendable or shortenable member, such as a spindle or a hydraulic or pneumatic cylinder (not visible), by means of which the level of the carrying frame can be adjusted. At the front, the frame beam (29) is attached to a coupling linkage (not visible) so as to be freely pivotable, by means of which the tedding machine (27) can be coupled to a tractor vehicle.

The carrying frame is coupled to a tiltable work frame (40). An adjusting member (32), here in the form of a piston/cylinder combination, engages with each of the frame beams (31) of the two groups of plant-processing members (18, 19). As a result of the actuation of said adjusting element which is pivotably coupled to the work frame (40) at point (33), the respective frame beam (31) of a group can be pivoted or rotated about a hinge pin or pivot pin (35) which is directed upwards at least in the transport position. According to the invention, the location of the hinge pin or pivot pin (35) which is at least substantially vertical in the transport position is arranged as illustrated in Fig.4.

In the operating position illustrated in Fig. 2, the frame beams (31) of the two groups (18,19) are in each case moved in the direction of movement A to the transport position illustrated in Fig.3 and Fig.4 by pivoting about the respective pivot pin (35).

A central frame beam (34) which extends at right angles to the direction of movement is attached to the work frame (40). Said central frame beam (34) is coupled to the frame beams (31) of the two groups of plant-processing members (18,19) in such a way that each of the frame beams (31) is coupled so as to be able to rotate about a hinge point or pivot pin (35) near the two ends of the central frame beam and wherein each hinge point or pivot pin (35) according to the invention is situated between the upwardly directed rotation shaft (36) of the innermost plant-processing member (22,23) of each group and the centre line M of the common frame (2). According to the invention, it is thus possible to place the hinge point of the pivot pin (35) of the innermost plant-processing member of each group, calculated from the centre line of the common frame, further inwards. In this way, both hinge points can be placed closer to the centre line and it is thus possible to achieve a significant width reduction of the tedding machine in the transport position.

The work frame (40) is tiltable about shaft (38), which also makes the horizontal central frame beam (34) adjustable, if desired also its height, and can thus move the two groups of plant-processing members from an operating position to a transport position via a folded-up position, and vice versa. Thus, the central frame beam (34) is preferably coupled to one or more beams which are supported around horizontal shafts (38) by the work frame. By actuating a lifting cylinder (37), such as a hydraulic or pneumatic cylinder, it is possible, if desired, to set a different height level and simultaneously to tilt the two groups of plant-processing members.

More preferably, it is possible to move a group of plant-processing members with respect to the central frame beam or drawbar, in particular by pivoting or rotating, by means of a lifting cylinder (37), wherein the lifting cylinder is attached on one side to the group of plant-processing members, for example to a frame beam of the group of plant-processing members, and on the other side to the carrying frame, and in that the lifting cylinder comprises a first cylinder housing which is connected to the group of plant-processing members, a second cylinder housing which is connected to the central frame beam and a common piston rod, which connects both cylinder housings and is slidably accommodated therein, wherein the effective internal surface area of the first cylinder housing is larger than the effective internal surface area of the second cylinder housing. The first cylinder housing serves to pivot a group of plant-processing members, and preferably both groups of plant-processing members, upwards into a headland position and the second cylinder housing serves to pivot a group of plant-processing members, and preferably both groups of plant-processing members, upwards from the headland position into a folded-up position, following which the groups of plant-processing members can be pivoted towards each other about the vertical rotation shafts or pivot pins (35) into the transport position. Such a device is for example known from Dutch patent NL-1031852 C. Due to the fact that the diameter (i.e. the effective surface area) of the first cylinder housing is larger than the diameter (i.e. the effective surface area) of the second cylinder housing, it is possible to establish a sequence for folding up the groups of plant-processing members. Preferably, the first cylinder housing serves for pivoting a group of plant-processing members upwards into a headland position and the second cylinder housing for pivoting a group of plant-processing members upwards from the headland position into a folded-up position. Since now only one lifting cylinder is required for adjusting the headland position and the folded-up position, it is furthermore possible, according to the invention, to produce a very economic tedding machine.

In practice, in the described embodiment, the two groups of plant-processing members are moved from the transport position to the headland position or operating position by first actuating adjusting element (32) which results in the frame beams (31) of two groups of plant-processing members (18, 19) being pivoted outwards about hinge points or pivot pins (35) fastened to the central frame beam (34), thus reaching the desired folded-up position. Subsequently, the lifting cylinder (37) is actuated, thus tilting the two groups of plant-processing members in the folded-up position from a substantially vertical orientation to a substantially horizontal orientation and, at the same time, the height level of the plant-processing members is optionally changed and they are placed in a headland position so that the plant-processing members of the two groups are arranged in such a way that, in the operating position, they are in one line and can process the plants on a continuous piece of land; as has already been described above, this means that the tedding teeth of a plant-processing member, in operation, describe a path and are arranged in such a manner that, in operation, the path of the tedding teeth of a directly adjacent plant-processing member is traversed.

## Claims

1. Tedding machine (27) for tedding plants lying on the ground, comprising a common frame (2), and provided with a number of plant-processing members, wherein the plant processing members (20) are arranged in two groups (18, 19) of at least three plant-processing members (20) with tedding teeth (26) which are attached to the common frame and, in an operating position, can be rotatably driven about upward rotation shafts (36), wherein the common frame (2) is coupleable to a tractor vehicle and comprises a work frame (40) and a carrying frame (39) which is coupled to the work frame, wherein the work frame (40) comprises a horizontal central frame beam (34), is tiltable and configured to move the plant-processing members (20) from an operating position to a folded-up position, wherein the carrying frame comprises wheels (30) for resting the carrying frame (39) on the ground, wherein the tedding machine can be brought to a transport position wherein each group (18, 19) is mounted on a respective side of the common frame (2) so as to be forwardly pivotable from the operating position to the folded-up position, wherein the plant-processing members (20) in each group (18, 19), in the operating position, are in a line at right angles to the direction of travel so that the tedding teeth (26) of a plant-processing member describe a path and are arranged such that, in operation, the path of the tedding teeth (26) of a directly adjacent plant-processing member is traversed, and wherein the work frame (40) comprises a pivoting device which has, for at least one group, a respective pivot pin (35) which is substantially vertical, at least in the transport position, in such a way that the at least one group can be brought from the folded-up position to the transport position by pivoting about the vertical pivot pin (35), and wherein the vertical pivot pin (35) is connected to the horizontal central frame beam (34) and is situated between the upwardly directed rotation shaft (36) of an inner plant-processing member (22, 23) of the group and the centre line of the common frame (2) and in the transport position, the upwardly directed rotation shafts (36) of the plant-processing members are substantially horizontal and at right angles to the direction of movement.

2. Tedding machine according to Claim 1, **characterized in that,** in the operating position, all plant-processing members (20-25) are in one line which is at right angles to a direction of travel.

3. Tedding machine according to one of the preceding claims, **characterized in that** the central frame beam (34) forms a common member for both groups of plant-processing members with a separate vertical pivot pin (35) for each group.

4. Tedding machine according to one of the preceding claims, **characterized in that** each group consists of at least four plant-processing members.

5. Tedding machine according to one of the preceding claims, **characterized in that** the diameter of the plant-processing members is at least 1.65 m, and more preferably is at least 1.7 m.

6. Tedding machine according to one of the preceding claims, **characterised in that** the plant-processing members (20) of the two groups (18, 19) are arranged in such a way that, in the operating position, the tedding teeth of an innermost plant-processing member (22) of the first group (18) describe a path which, in operation, traverses the path of the tedding teeth of an innermost plant-processing member (23) of the second group (19).

## Patentansprüche

1. Zetter (27) zum Zettwenden von auf dem Boden liegenden Pflanzen, mit einem gemeinsamen Rahmen (2) und versehen mit einer Anzahl von pflanzenverarbeitenden Elementen (20), wobei die pflanzenverarbeitenden Elemente (20) in zwei Gruppen (18, 19) aus wenigstens drei pflanzenverarbeitenden Elementen (20) mit Zettzähnen (26) angeordnet sind, die an dem gemeinsamen Rahmen angebracht sind und in einer Betriebsstellung drehbar um nach oben gerichtete Drehwellen (36) angetrieben werden können, wobei der gemeinsame Rahmen (2) an ein Schleppfahrzeug koppelbar ist und einen Arbeitsrahmen (40) und einen Trägerrahmen (39) aufweist, der an den Arbeitsrahmen gekoppelt ist, wobei der Arbeitsrahmen (40) einen horizontalen zentralen Rahmenholm (34) aufweist, kippbar ist und so konfiguriert ist, dass er die pflanzenverarbeitenden Elemente (20) aus einer Betriebsstellung in eine hochgeklappte Stellung bewegen kann, wobei der Trägerrahmen Räder (30) zum Auflegen des Trägerrahmens (39) auf dem Boden aufweist, wobei der Zetter in eine Transportstellung gebracht werden kann, wobei jede Gruppe (18, 19) auf einer jeweiligen Seite des gemeinsamen Rahmens (2) derart befestigt ist, dass sie von der Betriebsstellung in die hochgeklappte Stellung nach vorne verschwenkt werden kann, wobei sich die pflanzenverarbeitenden Elemente (20) in jeder Gruppe (18, 19) in der Betriebsstellung in einer Linie im rechten Winkel zu der Fahrtrichtung befinden, so dass die Zettzähne (26) eines pflanzenverarbeitenden Elements einen Weg beschreiben und auf eine solche Weise angeordnet sind, dass im Betrieb der Weg der Zettzähne (26) eines direkt benachbarten pflanzenverarbeitenden Elements gequert wird, und wobei der Arbeitsrahmen (40) eine Schwenkvorrichtung aufweist, die für wenigstens eine Gruppe einen jeweiligen Drehzapfen (35) aufweist, der wenigstens in der Transportstellung auf eine solche Weise im Wesentlichen vertikal ist, dass die wenigstens eine Gruppe durch Verschwenken um den vertikalen Drehzapfen (35) aus der hochgeklappten Stellung in die Transportstellung gebracht werden kann, und wobei der vertikale Drehzapfen (35) mit dem horizontalen zentralen Rahmenholm (34) verbunden ist und sich zwischen der nach oben gerichteten Drehwelle (36) eines inneren pflanzenverarbeitenden Elements (22, 23) der Gruppe und der Mittellinie des gemeinsamen Rahmens (2) befindet und in der Transportstellung die nach oben gerichteten Drehwellen (36) der inneren pflanzenverarbeitenden Elemente im Wesentlichen horizontal und in rechten Winkeln zur Bewegungsrichtung verlaufen.

2. Zetter nach Anspruch 1, **dadurch gekennzeichnet, dass** sich in der Betriebsstellung alle pflanzenverarbeitenden Elemente (20 - 25) in einer Linie befinden, die sich im rechten Winkel zu einer Fahrtrichtung erstreckt.

3. Zetter nach einem der vorhergehenden Ansprüche, **dadurch gekennzeichnet, dass** der zentrale Rahmenholm (34) ein gemeinsames Element für beide Gruppen aus pflanzenverarbeitenden Elementen mit einem separaten vertikalen Drehzapfen (35) für jede Gruppe bildet.

4. Zetter nach einem der vorhergehenden Ansprüche, **dadurch gekennzeichnet, dass** jede Gruppe aus wenigstens vier pflanzenverarbeitenden Elementen besteht.

5. Zetter nach einem der vorhergehenden Ansprüche, **dadurch gekennzeichnet, dass** der Durchmesser der pflanzenverarbeitenden Elemente mindestens 1,65 m, vorzugsweise mindestens 1,7 m, beträgt.

6. Zetter nach einem der vorhergehenden Ansprüche, **dadurch gekennzeichnet, dass** die pflanzenverarbeitenden Elemente (20) der beiden Gruppen (18, 19) auf eine solche Weise angeordnet sind, dass die Zettzähne eines am weitesten innen gelegenen pflanzenverarbeitenden Elements (22) der ersten Gruppe (18) in der Betriebsstellung einen Weg beschreiben, der im Betrieb den Weg der Zettzähne eines am weitesten innen gelegenen pflanzenverarbeitenden Elements (23) der zweiten Gruppe (19) quert.

## Revendications

1. Engin de fanage (27) servant au fanage de plantes se trouvant au sol, comprenant une structure commune (2), et pourvu d'un certain nombre d'organes de traitement de plantes, dans lequel les organes de traitement de plantes (20) sont agencés en deux groupes (18, 19) d'au moins trois organes de traitement de plantes (20) comportant des griffes de fanage (26) qui sont fixés à la structure commune et, dans une position fonctionnelle, peuvent être entraînés en rotation autour d'arbres de rotation orientés vers le haut (36), dans lequel la structure commune (2) peut être accouplée à un véhicule tracteur et comprend une structure de travail (40) et une structure de support (39) qui est accouplée à la structure de travail, dans lequel la structure de travail (40) comprend une poutre de structure centrale horizontale (34), peut être inclinée et est configurée pour déplacer les organes de traitement de plantes (20) d'une position fonctionnelle à une position repliée, dans lequel la structure de support comprend des roues (30) servant à placer la structure de support (39) en appui sur le sol, dans lequel l'engin de fanage peut être amené dans une position de transport dans laquelle chaque groupe (18, 19) est monté sur un côté respectif de la structure commune (2) de façon à pouvoir être pivoté vers l'avant de la position fonctionnelle à la position repliée, dans lequel les organes de traitement de plantes (20) dans chaque groupe (18, 19), dans la position fonctionnelle, sont agencés en file à angle droit vis-à-vis de la direction de déplacement de telle sorte que les griffes de fanage (26) d'un organe de traitement de plantes décrivent une trajectoire et sont agencés de telle sorte que, lors du fonctionnement, la trajectoire des griffes de fanage (26) d'un organe de traitement de plantes directement adjacent soit croisée, et dans lequel la structure de travail (40) comprend un dispositif de pivotement qui comporte, pour au moins un groupe, une goupille formant pivot respective (35) qui est essentiellement verticale, au moins dans la position de transport, de telle sorte que le ou les groupes puissent être amenés de la position repliée à la position de transport par pivotement autour de la goupille formant pivot verticale (35), et dans lequel la goupille formant pivot verticale (35) est raccordée à la poutre de structure centrale horizontale (34) et est située entre l'arbre de rotation orienté vers le haut (36) d'un organe de traitement de plantes intérieur (22, 23) du groupe et la ligne médiane de la structure commune (2) et, dans la position de transport, les arbres de rotation orientés vers le haut (36) des organes de traitement de plantes sont essentiellement horizontaux et à angle droit vis-à-vis de la direction de déplacement.

2. Engin de fanage selon la revendication 1, **caractérisé en ce que**, dans la position fonctionnelle, tous les organes de traitement de plantes (20 à 25) sont agencés en une file qui se trouve à angle droit vis-à-vis de la direction de déplacement.

3. Engin de fanage selon l'une des revendications précédentes, **caractérisé en ce que** la poutre de structure centrale (34) forme un organe commun pour les deux groupes d'organes de traitement de plantes avec une goupille formant pivot verticale (35) distincte pour chaque groupe.

4. Engin de fanage selon l'une des revendications précédentes, **caractérisé en ce que** chaque groupe est constitué d'au moins quatre organes de traitement de plantes.

5. Engin de fanage selon l'une des revendications précédentes, **caractérisé en ce que** le diamètre des organes de traitement de plantes est d'au moins 1,65 m et, plus préférablement, est d'au moins 1,7 m.

6. Engin de fanage selon l'une des revendications précédentes, **caractérisé en ce que** les organes de traitement de plantes (20) des deux groupes (18, 19) sont agencés de telle sorte que, dans la position fonctionnelle, les griffes de fanage d'un organe de traitement de plantes le plus intérieur (22) du premier groupe (18) décrivent une trajectoire qui, lors du fonctionnement, croise la trajectoire des griffes de fanage d'un organe de traitement de plantes le plus intérieur (23) du second groupe (19).
